# EUROPÄISCHE PATENTSCHRIFT

(11) **EP 2 362 554 B1**
(45) Veröffentlichungstag und Bekanntmachung des Hinweises auf die Patenterteilung: **17.04.2013**
(21) Anmeldenummer: 10001994.2
(22) Anmeldetag: 26.02.2010
(51) Int. Cl.: H04B 3/54, G06F 3/01

(54) **Verfahren zum Betrieb eines Rundsteuerempfängers und Rundsteuerempfänger umfassend eine Frequenzumschaltlogik**
Method for operating a remote control receiver and remote control receiver comprising frequency switching controller
Procédé destiné au fonctionnement d'un récepteur de télécommande et récepteur de télécommande comprenant contrôleur de commutation de fréquence

(43) Veröffentlichungstag der Anmeldung: 31.08.2011
(73) Patentinhaber: Landis+Gyr AG, 6301 Zug (CH)
(72) Erfinder: Bösiger, Hanspeter, 6312 Steinhausen (CH); Cherpillod, Michel, 6331 Hünenberg (CH); Fischer, Severin, 6300 Zug (CH); Pippi, Vanni, 6340 Baar (CH); Lendi, Dominic, 8925 Ebertwil (CH); Amper, Peter, 6340 Baar (CH)
(74) Vertreter: Rentsch Partner AG

(56) Entgegenhaltungen:
- EP-A1- 1 475 901
- WO-A2-01/47138
- US-A1- 2003 156 014

## Beschreibung

Die vorliegende Erfindung fällt in das Gebiet der Schaltungsanordnungen zur Fernsteuerung von Schaltmitteln in einem Stromverteilungsnetz, z.B. zum Ein- und Abschalten von Stromverbrauchern mittels eines über das Netz übertragenen Impulscodesignals; sie betrifft ein Verfahren zum Betrieb eines Rundsteuerempfängers, der mit einem Filtersatz f0 über mindestens ein Digitalfilter, einen Bitdetektor und eine Decodereinheit betrieben wird; ferner betrifft die Erfindung einen Rundsteuerempfänger, umfassend ein Digitalfilter, einen Bitdetektor und eine Decodereinheit.

### Stand der Technik

Herkömmliche Rundsteuerempfänger sind in der Lage, tonfrequente Signalspannungen zu empfangen, wobei diese Signalspannungen einem Wechseispannungs-Energleverteilnetz überlagert sind. Bei Rundsteueranlagen werden Steuerimpulse im Allgemeinen mit einer Steuerfrequenz aus dem Bereich von 120 - 2000 Hz übertragen. Das Eingangssignal wird im Empfänger aus den überlagerten Störsignalen durch elektromechanische oder elektronische Schwingungsanordnungen herausgefiltert und detektiert. Bei solchen herkömmlichen Verfahren muss für jede verwendete Steuerfrequenz ein eigens angepasster Empfänger entworfen und gebaut werden, der auf die jeweilige Steuerfrequenz ausgelegt ist, oder die Steuerfrequenz wird am Empfänger über eine optische oder elektronische Schnittstelle parametriert.

Früher wurden vermehrt Empfänger mit Steuerfrequenzen zwischen 1000 und 2000 Hz verwendet da die Einspeisung der Signale in das Stromnetz technisch einfacher war. Gründe hierzu waren niedrige Einspeiseleistungen und kleinere Ankopplungskomponenten. Durch den Einsatz von Leistungshalbleitern ist heutzutage die Nutzung der tieferen Frequenzen problemlos möglich. Hinzu kommt, dass bei niedrigeren Steuerfrequenzen die benötigte Einspeiseenergie deutlich geringen ausgelegt werden kann als bei höheren Steuerfrequenzen bei gleichen Übertragungsdistanzen. Die Energieversorgungsunternehmen sehen sich aber heute mit vermehrten Störungen im Frequenzbereich von ab 500 Hz konfrontiert. Dies beeinträchtigt die Qualität der Signalübertragung beträchtlich. Als Folge entscheiden sich die Stromversorger heute vermehrt auf tiefere Steuerfrequenzen umzustellen, was zur Folge hat, dass sowohl die Sendeanlage wie auch die Empfänger bei den Kunden umgerüstet werden müssen. Einen wesentlichen Beitrag zu derartigen Störfaktoren liefern zum Beispiel sogenannte Energiesparlampen, deren Verbreitung wegen ihrer geschätzten Energieeffizienz bei Verbrauchern stark anwächst.

Darüber hinaus werden immer mehr Versorgungsleitungen in den Boden verlegt was zusätzlich zu einer Verkürzung der Übertragungsdistanzen führt. Auf diese sich ändernde Topographie der Netze hinsichtlich der Rundsteuersignalübertragung und die grössere Störbelastung für die Steuersignale müssen sich die Energieversorgungsunternehmen mit Blick auf die Zukunft bereits heute einstellen. Ein besonderes Augenmerk gilt dabei den heute installierten und den neu zu installierenden Rundsteuerempfängern. Diese Rundsteuerempfänger sind quasi jetzt bereits an die zukünftigen Bedingungen der sich erweiternden Netztopographie anzupassen bzw. auszulegen, obwohl diese Bedingungen noch nicht endgültig bekannt, bzw. erkannt worden sind. Das heisst, dass die heute zu installierenden Rundsteuerempfänger den zukünftigen Bedingungen gerecht werden müssen, ohne diese bereits vollständig zu kennen. Sinnvollerweise können heute keine Rundsteuerempfänger in Betrieb genommen werden, die in zwei bis fünf Jahren den dann gültigen Bedingungen nicht mehr gerecht wären; zwangsläufig müssten solche Rundsteuerempfänger dann jeweils wieder ausgetauscht werden oder vor Ort den neuen Bedingungen angepasst werden.

Aus diesem Grund besteht das Bedürfnis, Rundsteuerempfänger heutzutage mit grösstmöglicher Flexibilität hinsichtlich ihrer Steuerfrequenz auszugestalten. Bekannt ist in diesem Zusammenhang, dass zur programmierbaren Anpassung von Rundsteuerempfängern an eine jeweilige Steuerfrequenz mit unterschiedlicher Bandbreite und Ansprechempfindlichkeit digitale Filter verwendet werden können. Die Signalerkennung in Rundsteueranlagen wird jedoch durch grosse Störamplituden erschwert. Insbesondere bei der Netzfrequenz und den dazugehörigen Oberschwingungen kann die auftretende Summen-Eingangsspannung etwas 300 - 1000-mal grösser sein als das noch mit Sicherheit zu erkennende Nutzsignal. Bei diesem schlechten Signal/Rauschverhältnis zur Filterrechnung ist das Eingangssignal mit grosser Stellenzahl zu digitalisieren. Eine Verwendung analoger und steuerfrequenzabhängiger Vorfilter ist zwar möglich, sie verhindert dann aber die flexible Anpassung an die zu verwendende Steuerfrequenz des Tonsignals.

Deshalb wird in der EP 352 660 A2 vorgeschlagen, die Steuerfrequenz mit einer entsprechend angepassten Modulationsfrequenz auf eine konstante Zwischenfrequenz als Summen-oder Differenzfrequenz der Steuer- mit der Modulationsfrequenz anzuheben und eines der beiden dadurch gebildeten Seitenbänder um mindestens eine Demodulationsfrequenz zurückzuverschieben. Sind von einem Rundsteuerempfänger mehrere Steuerfrequenzen zu detektieren, so muss für jede dieser Steuerfrequenzen eine Modulationsstufe vorhanden sein. Dies bedeutet für die Energieversorgungsunternehmen zwangsläufig, dass sie ihre neuen und auch die bestehenden Rundsteuerempfänger mit entsprechenden Modulationsstufen versehen, damit sie den an sie gerichteten Ansprüchen auch zukünftig gerecht werden. Dies hat aber den Nachteil, dass diese parallel ausgeführten Modulationsstufen zu Mehrkosten in der Herstellung führen.

Sofern den Energieversorgungsunternehmen bereits die zukünftig zum Einsatz gelangenden Steuerfrequenzen heute bekannt sind, ist die in der EP 352 660 A2 angegebene Lösung hilfreich und wohl auch völlig hinreichend. Es hat sich jedoch gezeigt, dass die Energieversorgungsunternehmen heute nicht in der Lage sind, die zukünftig zu verwendenden Steuerfrequenzen bereits heute zu definieren, da Rücksicht auf benachbarte Netze genommen werden muss und sich auch die Störeinflüsse, die Distanzen zwischen Sendern und Empfängern -wie oben erläutert- und die damit verbundene Einspeiseenergie verändern.

In der WO 2001/47138 ist eine Kommunikationseinheit beschrieben, die in der Lage ist, mindestens zwei einer Vielzahl von Signalprotokollen durch ein Digitalfilter zu unterstützen. Diese Kommunikationseinheit ist also in der Lage, mindestens diese zwei Signalprotokolle, auf die sie ausgelegt ist, im Parallelbetrieb zu erkennen und verarbeiten zu können, womit das Kommunikationssystem wahlweise mit dem einen oder dem anderen Signalprotokoll arbeiten kann. Als nachteilig könnte bei diesem herkömmlichen System angesehen werden, dass eine Auslegung auf mindestens zwei Signalprotokolle vorgenommen werden muss, das heisst, das eingangsseitig die Kommunikationseinheit mit entsprechendem Aufwand für einen Parallelbetrieb der mindestens zwei Signalprotokolle ausgestattet sein muss.

Die EP 1 475 901 beschreibt ein Modem für ein Rundsteuersystem mit einer Möglichkeit zum analogen Frequenzwechsel. Hierfür ist eine zu- bzw. abschaltbare Impedanzeinheit vorgesehen, mit welcher entsprechend eines Schaltzustands das Rundsteuersystem mit der einen oder der anderen Frequenz betrieben werden kann. Die wahlweise vorgeschaltete Impedanzeinheit erlaubt dabei aber lediglich den Betrieb in zwei fest vorgegebenen Frequenzen, für jede weitere Betriebsfrequenzwahl muss eine entsprechende Hardware-Komponente ergänzt werden, wobei nach einem Frequenzwechsel die übrigen Impedanzeinheiten nicht mehr genutzt würde. Als nachteilig könnte hierbei angesehen werden, dass für jede wählbare Betriebsfrequenz eine eigene Impedanzeinheit fest installiert werden müsste, was mit entsprechendem Aufwand verbunden wäre.

Vor dem Hintergrund der dargestellten Randbedingungen und der noch nicht endgültig feststellbaren Bedingungen an zukünftige Rundsteuersysteme, erwarten die Energieversorgungsunternehmen von den Herstellern solcher Systeme bereits heute eine grösstmögliche Flexibilität, wobei die grosse Anzahl in Haushalten installierter Rundsteuerempfängern hier im Vordergrund steht. Sind diese einmal für ihre eine Steuerfrequenz oder ihre mehreren, fixen Steuerfrequenzen gemäss EP 352 660 A2 ausgerüstet, müssten selbige Rundsteuerempfänger bei einer von diesen Steuerfrequenzen abweichenden weiteren Steuerfrequenz nachgerüstet oder ausgetauscht werden, was mit einem entsprechend hohen und äusserst unerwünschten Aufwand verbunden wäre.

### Darstellung der Erfindung

Es ist deshalb Aufgabe der vorliegenden Erfindung, ein Verfahren zum Betrieb eines Rundsteuerempfängers dahingehend weiterzubilden, dass es eine möglichst grosse Flexibilität hinsichtlich der Steuerfrequenzen auch bei im Betrieb befindlichen Rundsteuerempfängern bietet. Es ist ferner Aufgabe der vorliegenden Erfindung, einen Rundsteuerempfänger dahingehend weiterzubilden, dass er einen möglichst flexiblen Einsatz in Bezug auf die Steuerfrequenzen erlaubt.

Die der Erfindung für das Verfahren zugrunde liegende Aufgabe wird gelöst durch die Merkmale des Anspruchs 1; die diesen Erfindungsgedanken weiterbildende Merkmale sind Gegenstand der Unteransprüche 2 bis 4.

Der Kern der Erfindung hinsichtlich des Verfahrens ist, dass der Rundsteuerempfänger über eine Frequenzumschaltlogik von einem Filtersatz f0 auf einen anderen Filtersatz f1 - fn (mit n = 2, 3,...) umgeschaltet werden kann und zwar mittels eines empfangenen Umschaltsteuersignals fx. Von besonderem Vorteil ist dabei, dass auch jeder bereits im Betrieb befindliche Rundsteuerempfänger durch eine Fernumschaltung auf einen anderen Filtersatz umgeschaltete werden kann, und dies mit einer grossen Flexibilität. Schliesslich enthält die Frequenzumschaltlogik eine Vielzahl von Filtersätzen f0, f1 - fn (mit n = 2, 3,...), welche alle von Ferne zum Einsatz gebracht werden können.

Erstmalig mit dieser Erfindung ist es nun möglich, Rundsteuerempfänger zukunftsgerecht auszustatten. Energieversorgungsunternehmen können die neuen Rundsteuerempfänger heute installieren, ohne sich auf eine Steuerfrequenz festlegen zu müssen; zu gegebener Zeit ist jede gewünschte Anpassungen im Rahmen der im erfindungsgemässen Rundsteuerempfänger vorgesehenen Filtersätze f0, f1 - fn (mit n = 2, 3,...) an eine geänderte Netztopographie (benachbarte Netze, Steuerfrequenz, Einspeiseenergie, Störquellen) möglich; besonders vorteilhaft ist dabei, dass die Rundsteuerempfänger für eine Änderung der Filtersätze nicht mehr am Installationsort ausgetauscht oder angepasst werden müssen, was mit immensem Aufwand verbunden wäre.

Um eine möglichst sichere Umschaltung auf einen anderen Filtersatz zu gewährleisten ist erfindungsgemäss vorgesehen, dass ein Umschaltsteuersignal fx wiederholt gesendet wird und erst nach mindestens einer Wiederholung die Umschaltung tatsächlich vollzogen wird. Vorteilhafterweise kann somit verhindert werden, dass ein Rundsteuerempfänger aufgrund eines fehlerhaften Steuersignals ungewollt umschaltet.

Eine weitere Sicherheitsstufe beim Verfahren für den Betrieb eines Rundsteuerempfängers sieht bei der Umschaltung vor, dass der Rundsteuerempfänger nach jeder Umschaltung von sich aus ein beliebiges Steuersignal S im neuen Filtersatz -sozusagen als Kontrollsignalerwartet. Sollte innerhalb einer Wartezeit t dieses beliebige Steuersignal S im neuen Filtersatz nicht empfangbar sein, so schaltet der Rundsteuerempfänger selbständig wieder zurück auf den früheren Filtersatz, mit welchem er zuvor empfangbar war. Der Vorteil dieser Zurückschaltung ist, dass der Rundsteuerempfänger weiterhin angesteuert werden kann, wenngleich dann wieder mit dem früheren Filtersatz. Somit kann selbst bei einer missglückten Umschaltung jeder Rundsteuerempfänger nach einer Wartezeit t wieder erreicht werden.

Die der Erfindung für den Rundsteuerempfänger zugrunde liegende Aufgabe wird gelöst durch die Merkmale des Anspruchs 5; ein diesen Erfindungsgedanken weiterbildendes Merkmal ist Gegenstand des Unteranspruchs 6.

Der Kern der Erfindung hinsichtlich des Rundsteuerempfängers ist darin zu sehen, dass ausgangsseitig der Decodereinheit eine Frequenzumschaltlogik angeordnet ist, die über eine Filtersatzeinheit mit dem Digitalfilter verbunden ist, zwecks Umschaltung des Rundsteuerempfängers von einem Filtersatz f0 auf einen anderen Filtersatz f1 - fn (mit n = 2, 3,...).

Des Weiteren ist von Vorteil, dass die Frequenzumschaltlogik selbstständig auf einen früheren Filtersatz zurückschaltet, falls nach vorheriger Umschaltung der Rundsteuerempfänger auf einem anderen Filtersatz f1 - fn (mit n = 2, 3,...) ein beliebiges Steuersignal S nicht empfangen kann.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen bezeichnet. Es zeigen rein schematisch die
- Fig. 1: anhand eines Blockdiagramms die wesentlichen Funktionseinheiten eines erfindungsgemässen Rundsteuerempfängers;
- Fig.2: ein Ablaufdiagramm, welches das erfindungsgemässe Verfahren zur Umschaltung auf andere Filtersätze aufzeigt, und
- Fig.3: ein Diagramm der Spannung in Abhängigkeit der Frequenz zur Filterbetrachtung bei unterschiedlichen Filtersätzen.

### Wege zur Ausführung der Erfindung

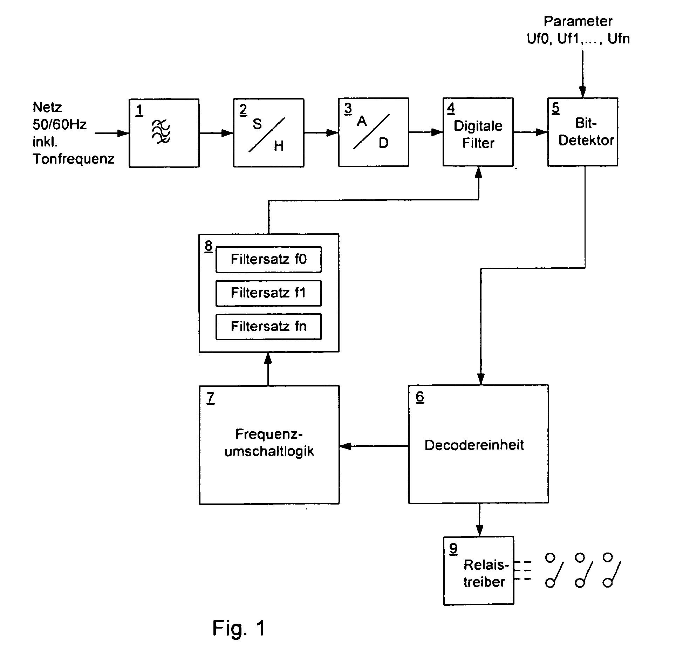

Fig. 1 zeigt in einem Blockdiagramm die wesentlichen Einheiten eines Rundsteuerempfängers, der über ein Bandpassfilter 1 an ein Energieversorgungsnetz (50Hz/60Hz) mit tonfrequenten Steuersignalen angeschlossen ist. Nach einer Sample/Hold-Einheit 2 wird das empfangene Steuersignal in einem A/D-Wandler 3 digitalisiert und einer digitalen Filtereinheit 4, einem Bit-Detektor 5 und einer Decodereinheit 6 zugeführt. Wie bei konventionellen Rundsteuerempfängern folgt danach ein Relaistreiber 9, der die gewünschten Schalthandlungen ausführt.

Erfindungsgemäss wird das Steuersignal ebenfalls einer Frequenzumschaltlogik 7 zugeführt, welcher eine Filtersatzeinheit 8 nachgestellt ist. Diese Filtersatzeinheit 8 ist rückgekoppelt auf die digitale Filtereinheit 4.

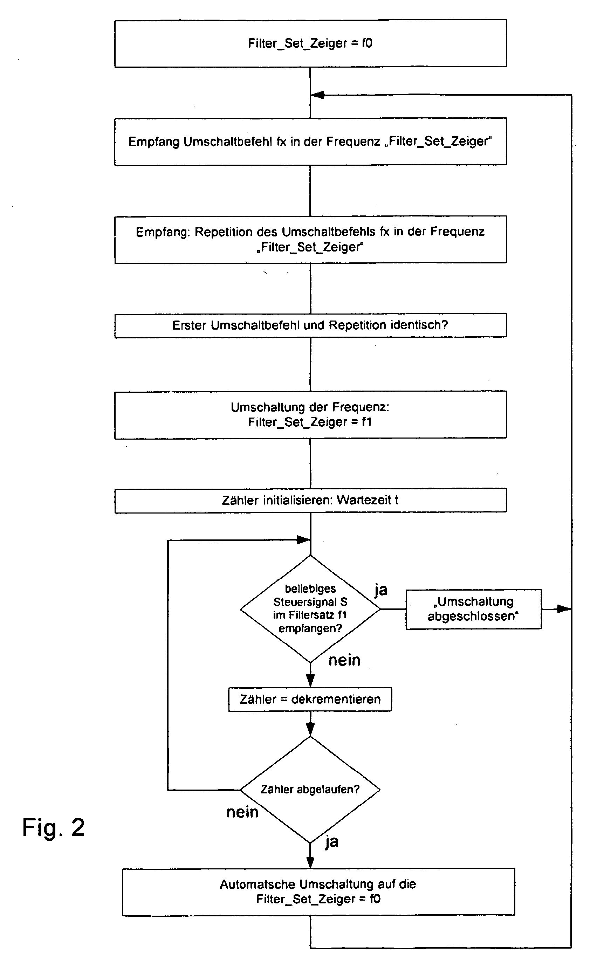

Im Folgenden wird das erfindungsgemässe Verfahren zum Betrieb eines Rundsteuerempfängers mit Blick auf die Fig. 1 und die Fig. 2 näher betrachtet, welche ein Ablaufdiagramm zur Umschaltung eines Rundsteuerempfängers auf einen anderen Frequenzsatz zeigt.

Als eine Grundeinstellung ist der vorliegende Rundsteuerempfänger beispielhaft auf einen Filtersatz f0 eingestellt, womit Steuersignale innerhalb dieses Filtersatzes f0 empfangbar und umsetzbar sind; der Fi!ter_Set_Zeiger ist auf f0 eingestellt. Empfängt nun der Rundsteuerempfänger, oder präzisierend die Frequenzumschaltlogik 7 ein Umschaltsteuersignal fx in der Frequenz des Filter_Set_Zeigers f0, so wird dieses registriert und die Frequenzumschaltlogik 7 erwartet das gleiche Umschaltsteuersignal fx mindestens ein zweites Mal und prüft, ob beide erhaltenen Umschaltsteuersignale fx identisch sind. Erst nach Abschluss dieser Überprüfung wird der gewünschte Filtersatz f1, f2,...,fn aus der Filtersatzeinheit 7 der digitalen Filtereinheit 4 übermittelt, womit der Rundsteuerempfänger auf den neuen Filtersatz -beispielhaft im vorliegenden Fall der Fig. 2 ist dies der Filtersatz f1- umgeschaltet. Die Repetition des Umschaltsteuersignals fx ist deshalb bedeutend, weil der Rundsteuerempfänger somit vor einer ungewollten Umschaltung -gegebenenfalls durch ein fehlerhaftes Steuersignal- geschützt werden kann. Selbstverständlich kann der Fachmann die Anzahl Repetitionen in Abhängigkeit von den Einsatzbedingungen von zwei auf mehr Repetitionen erhöhen, ohne den Kern der Erfindung zu verlassen. Selbst ein einfaches Empfangen des Umschaltsteuersignals fx könnte zur sofortigen Umschaltung des Rundsteuerempfängers genutzt werden, wobei hierbei die Betriebsfunktionssicherheit des Rundsteuerempfängers eingeschränkt werden könnte.

Mit der beschriebenen Umschaltung wird ein in den Figuren nicht explizit dargestellter Zähler mit einer Wartezeit t initialisiert, innerhalb welcher der umgeschaltete Rundsteuerempfänger zwingend auf ein beliebiges Steuersignal S im Filtersatz f1 erwartet. Empfängt der Rundsteuerempfänger ein solches Steuersignal S im Filtersatz f1, so ist die Umschaltung abgeschlossen und der Rundsteuerempfänger ist mit diesem Filtersatz f1 betriebsbereit. Sollte hingegen der Rundsteuerempfänger kein beliebiges Steuersignal S im Filtersatz f1 innerhalb der Wartezeit t des Zählers empfangen können, so schaltet der vorgängig umgeschaltete Rundsteuerempfänger automatisch von dem Filtersatz f1 auf den letzten vorherigen Filtersatz f0 zurück, in welchem er zuvor betriebsbereit war.

Diese automatische Rückumschaltung stellt sicher, dass ein Rundsteuerempfänger nicht ohne einen Funktionstest im neu gewählten Filtersatz umgeschaltet werden kann; sollte einmal ein Rundsteuerempfänger nicht korrekt auf einen anderen Filtersatz umgeschaltet worden sein und anschliessend dort nicht mehr empfangsbereit sein, so ist dieser Rundsteuerempfänger keineswegs verloren, da er auf den letzten Filtersatz mit geprüftem Empfang automatisch zurückschaltet.

Mittels dieses erfindungsgemässen Verfahrens zum Betrieb eines Rundsteuerempfängers lässt sich nun jeder Rundsteuerempfänger zu einem späteren Zeitpunkt an sich ändernde Netztopographien und zugehörigen Randbedingungen einfach anpassen.

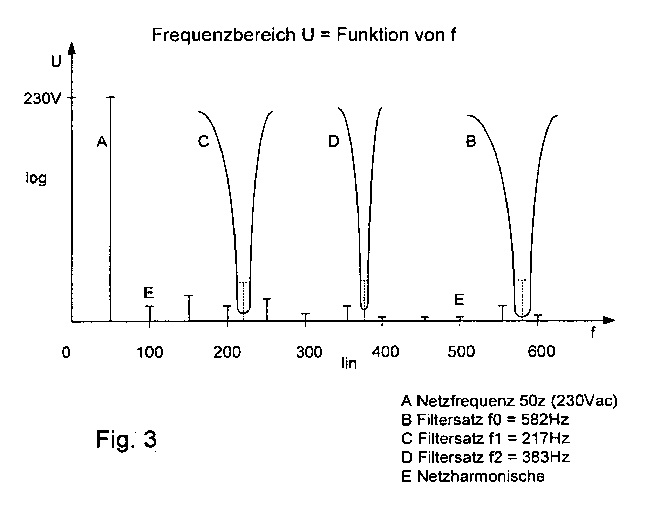

Fig. 3 zeigt anhand von drei ausgewählten Filtersätzen B, C, D den Frequenzbereich der Spannung als Funktion der Frequenz. Wie bereits erörtert, ist der erfindungsgemässe Rundsteuerempfänger nun zwischen den Filtersätzen B mit f0 = 582Hz, C mit f1=217Hz und D mit f2=383Hz aus der Ferne umschaltbar, ohne dass der jeweilige Installationsort aufgesucht werden muss. Mit A ist die Netzfrequenz bezeichnet und mit E Harmonische dieser Netzfrequenz.

Dies bringt einen entscheidenden Vorteil für die Energieversorger, die bereits heute Rundsteuerempfänger austauschen möchten oder müssen, ohne sich dabei auf zukünftige, neue Rahmenbedingungen bereits heute festlegen zu müssen. Die erfindungsgemäss ausgestatteten Rundsteuerempfänger sind mittels einer in ihnen abgelegten Anzahl von Filtersätzen f0, f1, f2,...fn mit n=3, 4,... zu jedem späteren Zeitpunkt sicher umschaltbar.

### Bezugszeichen

- 1: Bandpassfilter
- 2: Sample Hold
- 3: A/D-Wandler
- 4: digitale Filtereinheit
- 5: Bit-Detektor
- 6: Decodereinheit
- 7: Frequenzumschaltlogik
- 8: Filtersatzeinheit
- 9: Relaistreiber

## Patentansprüche

1. Verfahren zum Betrieb eines Rundsteuerempfängers, der mit einem Filtersatz f0 über ein Digitalfilter (4), einen Bitdetektor (5) und eine Decodereinheit (6) betrieben wird, **dadurch gekennzeichnet, dass** ein Umschaltsteuersignal fx mit einer Frequenz aus dem Filtersatz f0 über das Digitalfilter (4), den Bitdetektor (5) und die Decodereinheit (6) einer Frequenzumschaltlogik (7) zugeführt wird, zwecks Umschaltung des Rundsteuerempfängers auf einen anderen Filtersatz f1 - fn (mit n = 2, 3,...).

2. Verfahren nach Anspruch 1, **dadurch gekennzeichnet, dass** die Frequenzumschaltlogik (7) über eine Filtersatzeinheit (8), umfassend eine Anzahl Filtersätze f0, f1 - fn (mit n = 2, 3,...), mit dem Digitalfilter (4) verbunden ist und das Digitalfilter (4) durch das Umschaltsteuersignal fx auf den anderen Filtersatz f1 - fn (mit n = 2, 3,...) umgeschaltet wird.

3. Verfahren nach Anspruch 1 oder 2, **dadurch gekennzeichnet, dass** die Umschaltung auf den Filtersatz f1 - fn (mit n = 2, 3,...) erst nach einer Repetition des gesendeten Umschaltsteuersignals fx erfolgt.

4. Verfahren nach Anspruch 3, **dadurch gekennzeichnet, dass** der Rundsteuerempfänger nach der Umschaltung auf den Filtersatz f1 - fn (mit n = 2, 3,...) ein beliebiges Steuersignal S im Filtersatz f1 - fn (mit n = 2, 3,...) erwartet, und dass bei Ausbleiben dieses beliebigen Steuersignals S der Rundsteuerempfänger nach einer Wartezeit t selbständig mittels der Frequenzumschaltlogik (7) auf den Filtersatz f0 zurückschaltet.

5. Rundsteuerempfänger, umfassend ein Digitalfilter (3), einen Bitdetektor (4) und eine Decodereinheit (5), **dadurch gekennzeichnet, dass** ausgangsseitig der Decodereinheit (6) eine Frequenzumschaltlogik (7) angeordnet ist, die über eine Filtersatzeinheit (8) mit dem Digitalfilter (4) verbunden ist, zwecks Umschaltung des Rundsteuerempfängers von einem Filtersatz f0 auf einen anderen Filtersatz f1 - fn (mit n = 2, 3,...).

6. Rundsteuerempfänger nach Anspruch 5, **dadurch gekennzeichnet, dass** die Frequenzumschaltlogik (7) selbstständig auf den Filtersatz f0 zurückschaltet, falls nach vorheriger Umschaltung auf einen anderen Filtersatz f1 - fn (mit n = 2, 3,...) kein beliebiges Steuersignal Sx empfangbar ist.

## Claims

1. Method for operating a ripple control receiver which is operated with a filter set f0 using a digital filter (4), a bit detector (5) and a decoder unit (6), **characterized in that** a changeover control signal fx having a frequency from the filter set f0 is supplied using the digital filter (4), the bit detector (5) and the decoder unit (6) to a frequency changeover logic (7) for the purpose of changing over the ripple control receiver to a different filter set f1 - fn (where n = 2, 3, ...).

2. Method according to Claim 1, **characterized in that** the frequency changeover logic (7) is connected to the digital filter (4) using a filter set unit (8) comprising a number of filter sets f0, f1 - fn (where n = 2, 3, ...) and the digital filter (4) is changed over to the different filter set f1 - fn (where n = 2, 3, ...) by the changeover control signal fx.

3. Method according to Claim 1 or 2, **characterized in that** the changeover to the filter set f1 - fn (where n = 2, 3, ...) only occurs after a repetition of the changeover control signal fx transmitted.

4. Method according to Claim 3, **characterized in that** the ripple control receiver expects an arbitrary control signal S in the filter set f1 - fn (where n = 2, 3, ....) after the changeover to the filter set f1 - fn (where = 2, 3, ...) and **in that** if this arbitrary control signal S fails to appear, the ripple control receiver independently switches back to the filter set f0 by means of the frequency changeover logic (7) after a waiting time t.

5. Ripple control receiver comprising a digital filter (3), a bit detector (4) and a decoder unit (5), **characterized in that** at the output end of the decoder unit (6), a frequency changeover logic (7) is arranged which is connected to the digital filter (4) via a filter set unit (8) for the purpose of changing the ripple control receiver from a filter set f0 to a different filter set f1 - fn (where n = 2, 3, ...).

6. Ripple control receiver according to Claim 5, **characterized in that** the frequency changeover logic (7) independently switches back to the filter set f0 if no arbitrary control signal Sx is receivable after a previous changeover to a different filter set f1 - fn (where n = 2, 3, ...).

## Revendications

1. Procédé de conduite d'un récepteur de télécommande centralisée utilisé avec un jeu f0 de filtres par l'intermédiaire d'un filtre numérique (4), d'un détecteur (5) de bits et d'une unité de décodeur (6),
**caractérisé en ce que**
un signal fx de commande de commutation présentant une fréquence et provenant du jeu f0 de filtres est apporté à une logique (7) de commutation de fréquence par l'intermédiaire du filtre numérique (4), du détecteur (5) de bits et de l'unité de décodeur (6) pour commuter le récepteur de télécommande centralisée sur un autre jeu f1-fn de filtres (avec n = 2, 3, ...).

2. Procédé selon la revendication 1, **caractérisé en ce que** la logique (7) de commutation de fréquence est reliée au filtre numérique (4) par l'intermédiaire d'une unité (8) de jeu de filtres qui comprend plusieurs jeux f0, f1-fn de filtres (avec n = 2, 3, ...) et **en ce que** le filtre numérique (4) est commuté sur l'autre jeu f1-fn de filtres (avec n = 2, 3, ...) par le signal fx de commande de commutation.

3. Procédé selon les revendications 1 ou 2, **caractérisé en ce que** la commutation sur le jeu f1-fn de filtres (avec n = 2, 3, ...) ne s'effectue qu'après une répétition du signal fx de commande de commutation émis.

4. Procédé selon la revendication 3, **caractérisé en ce qu'**après la commutation sur le jeu f1-fn de filtres (avec n = 2, 3, ...), le récepteur de télécommande centralisée attend un signal quelconque de commande S dans le jeu f1-fn de filtres (avec n = 2, 3, ...) et **en ce que** lorsque ce signal quelconque de commande S est absent, le récepteur de télécommande centralisée rebascule automatiquement après un temps d'attende t sur le jeu f0 de filtres au moyen de la logique (7) de commutation de fréquence.

5. Récepteur de télécommande centralisée comprenant un filtre numérique (3), un détecteur (4) de bits et une unité de décodeur (5), **caractérisée en ce qu'**une logique (7) de commutation de fréquence reliée au filtre numérique (4) par l'intermédiaire d'une unité (8) à jeux de filtres est disposée à la sortie de l'unité de décodeur (6) pour commuter le récepteur de télécommande centralisée d'un jeu f0 de filtres à un autre jeu f1-fn de filtres (avec n = 2, 3, ...).

6. Récepteur de télécommande centralisée selon la revendication 5, **caractérisé en ce que** la logique (7) de commutation de fréquence rebascule automatiquement sur le jeu f0 de filtres au cas où aucun signal quelconque de commande Sx n'a pu être reçu après une commutation antérieure sur un autre jeu f1-fn de filtres (avec n = 2, 3, ...).
